# EUROPEAN PATENT SPECIFICATION

(11) **EP 0 760 347 B1**
(45) Date of publication and mention of the grant of the patent: **09.12.1998**
(21) Application number: 96202304.0
(22) Date of filing: 16.08.1996
(51) Int. Cl.: B65F 3/26, B65F 3/00, B62D 33/027

(54) **Closing mechanism for a pivoting container door**
Verschluss für Behälterklappe
Dispositif de fermeture d'une porte à bascule de conteneur

(30) Priority: 24.08.1995 NL 1001038
(43) Date of publication of application: 05.03.1997
(73) Proprietor: Geesink Group B.V., 8305 AG Emmeloord (NL)
(72) Inventor: Evers, Ruud, 6043 WK Roermond (NL); Verhoeven, Leonardus Adrianus Maria, 3930 Hamont-Achel (BE)
(74) Representative: Vollebregt, Cornelis Jacobus, Ir.

(56) References cited:
- FR-A- 1 389 588
- US-A- 2 752 194
- US-A- 5 197 782

## Description

The invention relates to a container provided with a bottom and with upright side and front walls, and also with a door provided at the rear end of the container, which door pivots between a closed position and an open position about a substantially horizontal pivot axis positioned near the upper end of a door, whilst locking means are provided for locking the door in its closed position.

US-A-5.197.782 shows a container of the above mentioned kind wherein the door is only pivotable about a horizontal pivot axis and can be fixed in the closed position by means of latching members which are displacable in a substantially horizontal direction for gripping behind shoulder means on the door.

Containers of this type are for example used for transporting waste or the like material. In many cases said waste material is pressed together in the containers, so that large forces are exerted on the door thereby. On the one hand the door and the locking means securing the door in its closed position must be designed to be able to withstand the forces exerted thereon, whilst on the other hand it must be ensured that the door can be readily opened and closed.

According to the invention this may be achieved in that the door can be moved upwards by means of an adjusting mechanism when occupying its substantially closed position and in that said locking means comprise cooperating parts on the door and on the container designed to be brought into engagement by the upward movement of the door towards its entirely closed position.

When using the construction according to the invention it is possible to use simple locking means of sturdy construction, which can be brought into engagement with each other by moving the door. When the door is released said door will tend to move downwards again, partly under the influence of gravity, in order to move the locking means out of engagement with each other.

The invention will be explained in more detail hereafter with reference to an embodiment of the construction according to the invention diagrammatically illustrated in the accompanying figures.

Figure 1 is a side view of one end of a container with a door in locked position.Figure 2 is a side view corresponding with figre 1, wherein the door has been moved downwards a little from its entirely closed position.

Figure 3 shows the part of the container illustrated in figures 1 and 2, whilst the container takes up a tilted position for unloading.

The container 1 partially illustrated in the Figures comprises frame beams 2 extending in the longitudinal direction of the container, on which a bottom (not shown) is supported. The container is furthermore provided with upright side walls 3 and a front wall (not shown in the Figures). A door 4 is provided at the rear side of the container.

Ears 5 are provided on the sides of the door 4, near the upper side of said door 4. Upwardly sloping slotted holes 6 are formed in the parts of said ears 5 that face away from the door 4 and extend along the side walls 3 of the container, said slotted holes sloping upwards from their bottom ends in a direction away from the door 4. Pivot pins 7 connected to the side walls 3 are positioned in said slotted holes.

Instead of using the slotted holes 6 it is also possible to use wider holes for receiving the pins 7. It is not objectionable when the door 4 moves outwards slightly at the upper side, so that it will not be necessary to make very heavy demands on the dimensional accuracy of the suspension structure.

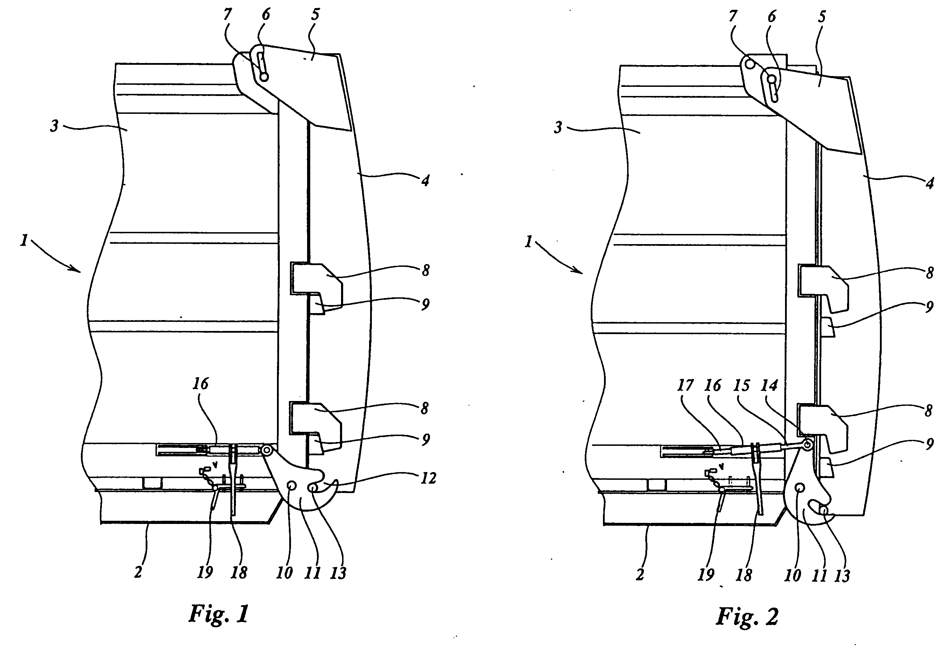

As is furthermore shown in the Figures, two spaced-apart, substantially L-shaped hooks 8, one being positioned above the other, are secured to the ends of side walls 3, said hooks in the closed position of the door 4 shown in Figure 1 engaging behind cams 9 fixed to the door 4. As will thereby be apparent from Figure 1, the boundary surfaces of hooks 8 and cams 9, which are in contact with each other, likewise slope upwards from their bottom ends and, when slotted holes 6 are used instead of holes loosely surrounding the pins 7, in substantially the same direction as the slotted holes 6.

Closing hooks 11 are pivoted to the container near the bottom ends of the side walls 3 by means of pivot pins 10 extending horizontally and perpendicularly to the longitudinal direction of the container. A curved slot 12 is formed in each of said closing hooks 11 provided near the sides of the container, said slots functioning to receive a catch pin 13 fixed to the bottom end of the door.

At the end of each closing hook 11 positioned some distance above pivot pin 10 one end of a threaded rod 15 is coupled to said closing hook by means of a pin 14 extending parallel to pivot pin 10. The end of threaded rod 15 remote from pin 14 is screwed into an internally threaded sleeve 16. The end of a threaded rod 17 connected to a side wall of the container is screwed into the end of sleeve 16 remote from threaded rod 15.

The threads of threaded rods 15 and 17 are of opposite pitch. The sleeve 16 can be turned about its axis by means of a ratchet spanner 18 in order to move the threaded rods 15 and 17 towards each other or away from each other.

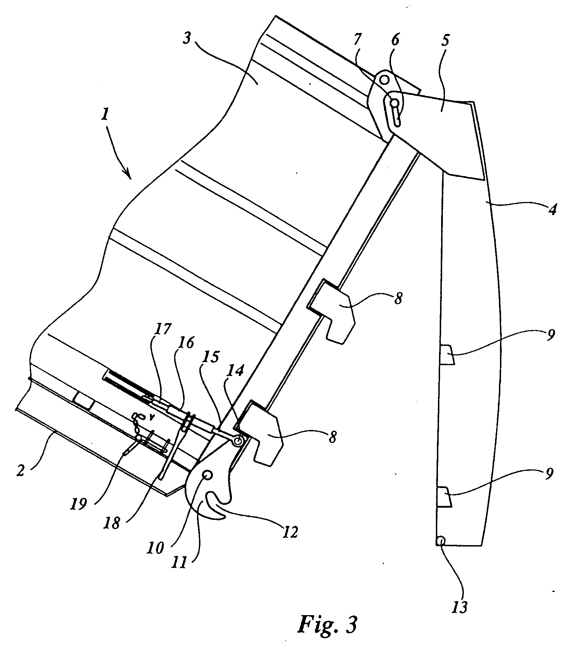

It will be apparent that the closing hooks 11 can be pivoted clockwise about the pivot pins 10, seen in the Figure, to the position shown in Figure 2 by turning the threaded sleeves 16 provided on either side of the container in the right direction by means of the ratchet spanners 18. Said pivoting causes the closing hooks 11 to urge the catch pins 13 positioned in the slots 12 downward from the position shown in Figure 1 to the position shown in Figure 2, which action is supported by the weight of door 4, which likewise moves downwards with respect to its pivot pins 7. The cams 9 are thereby released from the locking hooks 8. Then the container can be tilted to the position shown in Figure 3 in order to be unloaded.

Of course also other means for pivoting the closing hooks 11 may be used, such as for example hydraulic or pneumatic setting cylinders, lever transmissions or the like.

After the container has been unloaded it will be positioned horizontally again, so that the door is returned to the position shown in Figure 2. Then the closing hooks 11 can be pivoted about the pivot pins 10 again from the position shown in Figure 2 to the position shown in Figure 1 by means of the adjusting mechanism formed by parts 15-18. The door 4 will thereby be moved upwards again as a result of the co-operation between closing hooks 11 and the catch pins 13, so that the cams 9 are moved behind the hooks 8 again and the door will be pressed firmly against the rear side of the container into its closed position as a result of the slope of the co-operating surfaces of hooks 8 and cams 9 and the slope of slotted holes 6.

As is furthermore shown in the Figures a locking pin 19 is provided, by means of which the ratchet spanner 18 can be locked against rotation.

Of course variations to the above-described and illustrated embodiment of the construction according to the invention are conceivable within the scope of the invention as defined in the appended claims.

Thus cams comparable with the cams 9 may be fixed to the container instead of the hooks 8, whereby hooks will be fixed to the door, which hooks will be fitted on the door in such a manner that they will engage the hooks fixed to the container from below.

If desired the cams 9 may be in the shape of round pins, which will provide the locking of the door in its closed position in co-operation with suitable hooks.

## Claims

1. A container (1) provided with a bottom (2) and with upright side and front walls (3), and also with a door (4) provided at the rear end of the container, which door (4) pivots between a closed position and an open position about a substantially horizontal pivot axis (7) positioned near the upper end of the door (4), whilst locking means (8, 9) are provided for locking the door (4) in its closed position, characterized in that the door (4) can be moved upwards by means of an adjusting mechanism (10-13) when occupying its substantially closed position and in that said locking means (8, 9) comprise co-operating parts on the door (4) and on the container (1) designed to be brought into engagement by the upward movement of the door (4) towards its entirely closed position.

2. A container (1) according to claim 1, characterized in that said locking means comprises parts (8) and cams (9) which engage each other when the door (4) is moved upwards.

3. A container (1) according to claim 2, characterized in that said parts (8) are hook-shaped and are fixed to side walls (3) of the container (1) and that the cams (9) are moved into engagement with said hook-shaped parts (8) from below when the door (4) is moved upwards.

4. A container (1) according to claim 3, characterized in that said hook-shaped parts (8) comprise boundary surfaces co-operating with said cams (9), which boundary surfaces slope upwards from their bottom ends in a direction towards the interior of the container (1).

5. A container (1) according to claim 4, characterized in that said cams (9) likewise comprise surfaces sloping upwards from their bottom ends in a direction towards the interior of the container (1), which surfaces co-operate with said hook-shaped parts (8).

6. A container (1) according to any one of the preceding claims, characterized in that pivot pins (7) about which the door (4) pivots are accommodated in upwardly sloping slotted holes (6).

7. A container (1) according to any one of the preceding claims, characterized in that catch pins (13) are fixed to the bottom end of the door (4), which catch pins (13) co-operate with closing hooks (11) which pivot about horizontal pivot pins (10), which closing hooks (11) are provided with slot-shaped recesses (12) for receiving said catch pins.

## Patentansprüche

1. Behälter (1), der mit einem Boden (2) und mit aufrechten Seiten- und Vorderwänden (3) sowie ferner mit einer Tür (4) versehen ist, die sich am hinteren Ende des Behälters befindet und zwischen einer geschlossenen Position und einer offenen Position um eine im wesentlichen horizontale Schwenkachse (7) verschwenkbar ist, welche in der Nähe des oberen Endes der Tür (4) angeordnet ist, während Verriegelungseinrichtungen (8,9) zum Verriegeln der Tür (4) in ihrer geschlossenen Position vorgesehen sind, dadurch gekennzeichnet, daß die Tür (4) mit Hilfe eines Einstellmechanismus (10-13) nach oben bewegt werden kann, wenn sie im wesentlichen ihre geschlossene Position einnimmt, und daß die Verriegelungseinrichtungen (8,9) zusammenwirkende Teile an der Tür (4) und am Behälter (1) umfassen, die so ausgebildet sind, daß sie durch die Aufwärtsbewegung der Tür (4) in Richtung auf ihre vollständig geschlossene Position in Eingriff gebracht werden.

2. Behälter (1) nach Anspruch 1, dadurch gekennzeichnet, daß die Verriegelungseinrichtungen Teile (8) und Nocken (9) umfassen, die miteinander in Eingriff treten, wenn die Tür (4) nach oben bewegt wird.

3. Behälter () nach Anspruch 2, dadurch gekennzeichnet, daß die Teile (8) hakenförmig ausgebildet und an Seitenwänden (3) des Behälters (1) fixiert sind und daß die Nocken (9) von unten in Eingriff mit den hakenförmigen Teilen (8) bewegt werden, wenn die Tür (4) nach oben bewegt wird.

4. Behälter (1) nach Anspruch 3, dadurch gekennzeichnet, daß die hakenförmigen Teile (8) Grenzflächen umfassen, die mit den Nocken (9) zusammenwirken und von ihren unteren Enden in einer Richtung zum Inneren des Behälters (1) hin nach oben geneigt sind.

5. Behälter (1) nach Anspruch 4, dadurch gekennzeichnet, daß die Nocken (9) in entsprechender Weise Flächen umfassen, die von ihren unteren Enden in einer Richtung zum Inneren des Behälters (1) nach oben geneigt sind und mit den hakenförmigen Teilen (8) zusammenwirken.

6. Behälter (1) nach einem der vorangehenden Ansprüche, dadurch gekennzeichnet, daß Gelenkzapfen (7), um die die Tür (4) verschwenkt wird, in aufwärts geneigten Schlitzlöchern (6) aufgenommen sind.

7. Behälter (1) nach einem der vorangegangenen Ansprüche, dadurch gekennzeichnet, daß Fangstifte (13) am unteren Ende der Tür (4) fixiert sind, die mit Schließhaken (11) zusammenwirken, welche um horizontale Schwenkzapfen (10) verschwenkt werden und mit schlitzförmigen Ausnehmungen (12) zur Aufnahme der Fangstifte versehen sind.

## Revendications

1. Conteneur (1) muni d'un fond (2) et de parois latérales et avant verticales (3), ainsi que d'une porte (4) prévue à l'extrémité arrière du conteneur, ladite porte (4) pivotant entre une position fermée et une position ouverte autour d'un axe de pivotement substantiellement horizontal (7) positionné près de l'extrémité supérieure de la porte (4), tandis que des moyens de verrouillage (8, 9) sont prévus pour verrouiller la porte (4) dans sa position fermée, caractérisé en ce que la porte (4) peut être relevée au moyen d'un mécanisme de réglage (10-13) lorsqu'elle occupe sa position substantiellement fermée et en ce que lesdits moyens de verrouillage (8, 9) comprennent des parties coopérantes sur la porte (4) et sur le conteneur (1) prévues pour être amenées en engagement par le mouvement ascendant de la porte (4) vers sa position de fermeture complète.

2. Conteneur (1) selon la revendication 1, caractérisé en ce que ledit moyen de verrouillage comprend des parties (8) et des cames (9) qui s'engagent quand la porte (4) est relevée.

3. Conteneur (1) selon la revendication 2, caractérisé en ce que lesdites parties (8) sont en forme de crochet et sont fixées aux parois latérales (3) du conteneur (1) et en ce que les cames (9) sont amenées par-dessous en engagement avec lesdites parties en forme de crochet (8) quand la porte (4) est relevée.

4. Conteneur (1) selon la revendication 3, caractérisé en ce que lesdites parties en forme de crochet (8) comprennent des surfaces limites coopérant avec lesdites cames (9), en ce que lesdites surfaces limites sont inclinées vers le haut à partir de leurs extrémités inférieures en direction de l'intérieur du conteneur (1).

5. Conteneur (1) selon la revendication 4, caractérisé en ce que lesdites cames (9) comprennent également des surfaces inclinées vers le haut à partir de leurs extrémités inférieures en direction de l'intérieur du conteneur (1), lesdites surfaces coopérant avec lesdites parties en forme de crochet (8).

6. Conteneur (1) selon l'une quelconque des revendications précédentes, caractérisé en ce que les axes de pivotement (7) autour desquels pivote la porte (4) sont logés dans des trous allongés inclinés vers le haut (6).

7. Conteneur (1) selon l'une quelconque des revendications précédentes, caractérisé en ce que des ergots de retenue (13) sont fixés à l'extrémité inférieure de la porte (4), lesdits ergots de retenue (13) coopérant avec des crochets de fermeture (11) qui pivotent autour d'axes de pivotement horizontaux (10), lesdits crochets de fermeture (11) étant munis d'encoches (12) pour recevoir lesdits ergots de retenue.
